# EUROPÄISCHE PATENTSCHRIFT

(11) **EP 1 825 989 B1**
(45) Veröffentlichungstag und Bekanntmachung des Hinweises auf die Patenterteilung: **04.06.2008**
(21) Anmeldenummer: 06026513.9
(22) Anmeldetag: 21.12.2006
(51) Int. Cl.: B29C 51/22

(54) **Vorrichtung zum Formen, Stanzen und Stapeln von tiefgezogenen Teilen aus thermoplastischem Kunststoff**
Apparatus for forming, punching and stacking thermoformed plastic parts
Outillage pour former, découper et empiler des pièces plastiques thermoformées

(30) Priorität: 26.01.2006 DE 102006003852
(43) Veröffentlichungstag der Anmeldung: 29.08.2007
(73) Patentinhaber: KIEFEL AG, 83395 Freilassing (DE)
(72) Erfinder: Crepaz, Johannes, 5071 Wals-Siezenheim (AT); Lindner, Martin, 5151 Nussdorf (AT)
(74) Vertreter: Castell, Klaus

(56) Entgegenhaltungen:
- WO-A-03/099541
- WO-A-20/04050322
- DE-A1- 19 716 655
- DE-U1- 9 108 344

## Beschreibung

Die Erfindung bezieht sich auf eine Vorrichtung zum Formen. Stanzen und Stapeln von tiefgezogenen Teilen aus thermoplastischem Kunststoff umfassend einen intermittierenden Folientransport, eine Heizung, ein feststehendes Oberwerkzeug, ein heb- und senkbares sowie schwenkbares Unterwerkzeug und eine Abstapeleinrichtung, wobei das Unterwerkzeug in einer schwenkbaren Linearführung aufgenommen ist.

Eine Vorrichtung dieser Art ist aus der DE 197 16 655 C2 bekannt.

Bei dieser bekannten Vorrichtung ist die Linearführung an ihrem unteren Ende schwenkbar gelagert und weist an ihrem oberen Ende die Führungseinrichtung für das Unterwerkzeug auf. Hierdurch entstehen aufgrund des hohen Gewichtes des Unterwerkzeuges große Drehmomente um den Schwenkpunkt, die bei der Ausbildung des Antriebes berücksichtigt werden müssen, was wegen der hohen Kräfte einen entsprechenden aufwendigen Antrieb erfordert. Außerdem werden die Laufruhe und die Taktgeschwindigkeit nachteilig beeinflusst.

Die WO 03/099541 A1 zeigt eine Thermoformanlage zur Herstellung von Formkörpern aus Kunststofffolie, beispielsweise Becher, Behälter, Deckel oder Lebensmittelumverpackungen, mit einer Umformstation mit einem zweiteiligen Formwerkzeug. Das zweiteilige Formwerkzeug weist einen einstellbar feststellbaren oberen Werkzeugtisch mit einem oberen Werkzeug mit darin beweglich gelagerten Vorstreckern und einen beweglichen unteren Werkzeugtisch mit einem unteren Werkzeug mit Kavitäten auf. Der bewegliche untere Werkzeugtisch ist mittels einer Führungseinrichtung geführt und wird durch eine Antriebseinrichtung relativ zum oberen Werkzeugtisch auf diesen zu und von diesem weg bewegt. Der untere Werkzeugtisch führt daher eine geradlinige Hubbewegung aus, ohne dass er zugleich eine Schwenkbewegung um seine eigene Längsachse ausführen muss. Die dort vorgestellte Anlage entkoppelt auf diese Weise die Schwenkbewegung von der linearen Hubbewegung.

Weitere Thermoformanlagen sind unter anderem aus der DE 91 08 344 U1 und der WO 2004/050322 A1 bekannt.

Aufgabe der Erfindung ist es, die durch den schweren Untertisch in Verbindung mit dem Unterwerkzeug auftretenden hohen Drehmomente an der Linearführung und die damit verbundenen Nachteile wie verstärkter Antrieb, geringe Taktzeit und ungenügende Laufruhe zu vermeiden.

Diese Aufgabe wird ausgehend von einer Vorrichtung der eingangs erläuterten Art erfindungsgemäß dadurch gelöst, dass der Schwenkpunkt der Linearführung in ihrem Zentrum angeordnet und das Schwenklager für die Linearführung ortsfest angeordnet ist. Durch die zentrische Anordnung des Schwenklagers bezogen auf die Linearführung treten relativ kleine Momente bezogen auf den Schwenkpunkt auf, weil bei der Verschiebung des Unterwerkzeuges dieses vor Beginn der Schwenkbewegung dem Schwenkpunkt angenähert wird, so dass mit zunehmender Verschiebung das durch den Untertisch bewirkte Drehmoment bezogen auf die Linearführung kleiner wird, bis es bei Erreichen des Schwenkpunktes den Wert 0 annimmt, und dann nach Überschreiten des Schwenkpunktes den Drehsinn umkehrt und somit vor Erreichen der Abstapelposition oder Schwenkendlage eine Bremswirkung ausübt. Hierdurch kann der Antrieb für das Verschwenken der Linearführung verhältnismäßig einfach ausgeführt werden, da wesentlich geringere Drehmomente als beim Stande der Technik auftreten.

Eine einfache konstruktive Ausgestaltung ergibt sich in Weiterbildung der Erfindung dadurch, dass zu beiden Seiten eines das Unterwerkzeug tragenden Untertisches jeweils eine Linearführung vorgesehen ist, die in ihrem Zentrum einen Lagerzapfen aufweist, der in einem ortsfesten Lager aufgenommen ist und dass an der Linearführung ein Schwenkarm angreift.

Die Antriebe für die Verschwenkung der Linearführung und die Verschiebung des Unterwerkzeuges können getrennte Motoren umfassen. Durch diese Ausgestaltung lässt sich die Schwenk- und Verschiebebewegung des Unterwerkzeuges hinsichtlich des zeitlichen Ablaufes unterschiedlich steuern, was einen günstigen Einfluss auf die durch das Gewicht des Untertisches und des Unterwerkzeuges erzeugten Momente hat.

Je nach Ausbildung der Antriebe kann es vorteilhaft sein, dass zwischen Servomotor und dem jeweiligen antreibenden Bauteil jeweils ein mechanisches Getriebe angeordnet ist.

Die Antriebe für die Verschwenkung der Linearführung und die Verschiebung des Unterwerkzeuges können auch Torque-Motoren umfassen.

Die Verschiebung des Unterwerkzeuges und die Verschwenkung der Linearführung können auf mannigfaltige Weise erfolgen. Hier kann praktisch jede Art von Antrieb zur Anwendung kommen.

Eine erste Möglichkeit besteht darin, dass für die Verschiebung des Unterwerkzeuges ein Kurbeltrieb vorgesehen ist.

Eine für die Praxis gute Lösung besteht darin, dass der Antrieb für die Verschwenkung der Linearführung und der Antrieb für die Verschiebung des Unterwerkzeuges jeweils eine Kurvenscheibe und eine dieser zugeordnete Rolle umfassen, deren durch die Kurvenscheibe bewirkte Verschiebungen auf Rollenhebel übertragbar sind, die auf Schubstangen einwirken, wobei die Schubstange für die Verschwenkung der Linearführung exzentrisch an dieser angreift, während die Schubstange für die Verschiebung des Unterwerkzeuges an einem Kniehebeltrieb angreift, dessen eines Ende am Unterwerkzeug und dessen anderes Ende ortsfest angeordnet ist. Diese Ausgestaltung ist äußerst robust und der Bewegungsablauf sowohl der Verschwenkung als auch der Verschiebung lässt sich durch Austausch jeweils einer Kurvenscheibe verändern.

Eine vorteilhafte Ausgestaltung des mit Kurvenscheiben arbeitenden Antriebs besteht darin, dass die beiden Kurvenscheiben auf der gleichen Welle sitzen, die durch einen Antrieb antreibbar ist. Hierbei beeinflussen die Konturen der Kurvenscheiben und deren Winkelstellung auf der Welle die Größe und den zeitlichen Ablauf der durch diesen Antrieb erzeugten Bewegung.

Es ist aber auch vorteilhaft, wenn die beiden Kurvenscheiben getrennte Antriebe aufweisen, die unabhängig voneinander regelbar sind. Hierdurch kann die Momentenverteilung an der Linearführung während der Schwenkbewegung weitgehend beeinflusst werden.

Die Erfindung wird nachfolgend anhand eines Ausführungsbeispieles näher erläutert. In der Zeichnung zeigen:

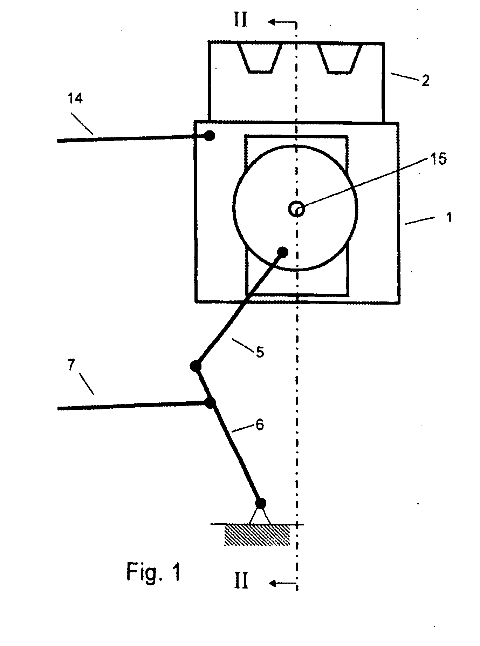

- Fig. 1:: eine schematische Darstellung einer schwenkbaren Linearführung für einen Untertisch mit Unterwerkzeug; und
- Fig.2:: einen Teilschnitt nach der Linie II-II in F i g .1.

Die zeichnerische Darstellung umfasst in schematischer Form nur Teilbereiche der gesamten Vorrichtung zum Formen, Stanzen und Stapeln von tiefgezogenen Teilen.

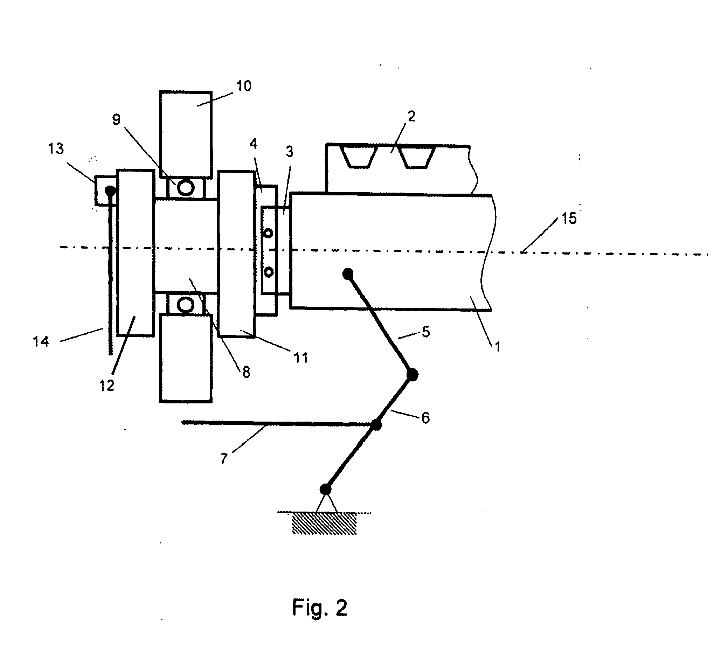

Ein mit 1 bezeichneter Untertisch trägt ein Unterwerkzeug 2 und weist auf jeder Seite einen Ansatz 3 auf, der in einer Linearführung 4 aufgenommen ist und somit eine Heb- und Senkbewegung des Untertisches 1 mit dem Unterwerkzeug 2 ermöglicht. Diese Verschiebebewegung des Untertisches 1 zusammen mit dem Unterwerkzeug 2 in der Linearführung 4 wird durch eine Kniehebelanordnung 5, 6 durchgeführt, die von einer Schubstange 7 beaufschlagbar ist. Die Schubstange 7 steht mit einem Antrieb in Verbindung, der in der Zeichnung nicht dargestellt ist und der jegliche bekannte Bauform umfassen kann, die in der Lage ist, eine Schubstange 7 in ihrer Längsrichtung hin- und herzuschieben, so dass die Kniehebelanordnung 5, 6 aus einer nahezu gestreckten Lage in eine in Fig.2 dargestellte abgeknickte Lage überführt werden kann.

Der Untertisch 1 ist an beiden Seiten durch jeweils eine Linearführung 4 geführt. Diese weist einen besonders kräftigen Lagerzapfen 8 auf, der durch ein Lager 9 drehbar gelagert ist, welches ortsfest in einem Maschinengestell 10 aufgenommen ist. Mit 11 ist eine Schwenkplatte bezeichnet, die einerseits die Linearführung 4 trägt und andererseits fest mit dem Lagerzapfen 8 verbunden ist. Am freien Ende des Lagerzapfens 8 ist eine Schwenkplatte 12 angeordnet, die einen Ansatz 13 trägt, an welchem eine Schubstange 14 angreift, um die Linearführung 4 zusammen mit dem Untertisch 1 und dem Unterwerkzeug 2 um die strichpunktierte Schwenkachse 15 zu verschwenken. Der Antrieb für die Schubstange 14 kann jede geeignete Bauart umfassen, die sicherstellt, dass diese Schubstange eine hin- und hergehende Bewegung ausführt, um aufgrund ihres exzentrischen Angriffs an der Schwenkplatte 12 eine Schwenkbewegung der Linearführung 4 und damit des Untertisches 1 zusammen mit dem Unterwerkzeug 2 um einen Winkel zu verschwenken, der notwendig ist, um das Unterwerkzeug 2 von einer Form- und Stanzposition zu einer Abstapelposition zu überführen.

## Patentansprüche

1. Vorrichtung zum Formen, Stanzen und Stapeln von tiefgezogenen Teilen aus thermoplastischem Kunststoff , umfassend einen intermittierenden Folientransport, eine Heizung, ein feststehendes Oberwerkzeug, ein heb- und senkbares sowie schwenkbares Unterwerkzeug (2) und eine Abstapeleinrichtung, wobei das Unterwerkzeug (2) in einer schwenkbaren Linearführung (4) aufgenommen ist, ***dadurch gekennzeichnet, dass*** ein Schwenkpunkt der Linearführung (4) in deren Zentrum angeordnet ist und dass das Schwenklager für die Linearführung (4) ortsfest angeordnet ist.

2. Vorrichtung nach Anspruch 1, **dadurch gekennzeichnet, dass** zu beiden Seiten eines das Unterwerkzeug (2) tragenden Untertisches (1) jeweils eine Linearführung (4) vorgesehen ist, die in ihrem Zentrum einen Lagerzapfen (8) aufweist, der in einem ortsfesten Lager (9) aufgenommen ist und dass an der Linearführung ein Schwenkantrieb angreift.

3. Vorrichtung nach Anspruch 1 oder 2, ***dadurch gekennzeichnet, dass*** Antriebe für die Verschwenkung der Linearführung (4) und die Verschiebung des Unterwerkzeuges (2) getrennte Servomotoren umfassen.

4. Vorrichtung nach Anspruch 3, **dadurch gekennzeichnet, dass** zwischen Servomotor und dem jeweiligen anzutreibenden Bauteil jeweils ein mechanisches Getriebe angeordnet ist.

5. Vorrichtung nach Anspruch 1 oder 2, ***dadurch gekennzeichnet,* dass** die Antriebe für die Verschwenkung der Linearführung (4) und die Verschiebung des Unterwerkzeuges (2) Tourque-Motoren umfassen.

6. Vorrichtung nach einem der Ansprüche 1 bis 5. **dadurch *gekennzeichnet,* dass** für die Verschiebung des Unterwerkzeuges (2) ein Kurbeltrieb vorgesehen ist.

7. Vorrichtung nach Anspruch 1, ***dadurch gekennzeichnet, dass*** einAntrieb für die Verschwenkung der Linearführung (4) und ein Antrieb für die Verschiebung des Unterwerkzeuges (2) jeweils eine Kurvenscheibe und eine dieser zugeordnete Rolle umfassen, deren durch die Kurvenscheibe bewirkte Verschiebungen auf Rollenhebel übertragbar sind, die auf Schubstangen (7, 14) einwirken, wobei die eine Schubstange (14) für die Verschwenkung der Linearführung exzentrisch an dieser angreift, während die andere Schubstange (7) für die Verschiebung des Unterwerkzeuges an einer Kniehebelanordnung (5, 6) angreift, deren eines Ende am Unterwerkzeug (2) und deren anderes Ende ortsfest angeordnet ist.

8. Vorrichtung nach Anspruch 6, **dadurch gekennzeichnet, dass** die beiden Kurvenscheiben auf der gleichen Welle sitzen, die durch einen Antrieb antreibbar ist.

9. Vorrichtung nach Anspruch 6, **dadurch gekennzeichnet, dass** die beiden Kurvenscheiben getrennte Antriebe aufweisen, die unabhängig voneinander regelbar sind.

## Claims

1. An apparatus for forming, punching and stacking deep-drawn parts of thermoplastic synthetic material, comprising an intermittent film transportation arrangement, a heating arrangement, a stationary upper tool, a lower tool (2) which is able to be raised and lowered and is swivellable, and a de-stacking arrangement, in which the lower tool (2) is held in a swivellable linear guide (4), **characterized in that** a swivel point of the linear guide (4) is arranged in the centre thereof and that the swivel bearing for the linear guide (4) is fixedly arranged.

2. The apparatus according to Claim 1, **characterized in that** on both sides of a lower table (1) carrying the lower tool (2), a linear guide (4) is respectively provided, which has in its centre a pivot pin (8) which is held in a fixed bearing (9) and that a swivel drive engages on the linear guide.

3. The apparatus according to Claim 1 or 2, **characterized in that** drives for the swivelling of the linear guide (4) and the displacement of the lower tool (2) comprise separate servo motors.

4. The apparatus according to Claim 3, **characterized in that** a mechanical gear is arranged respectively between the servo motor and the respective component which is to be driven.

5. The apparatus according to Claim 1 or 2, **characterized in that** the drives for the swivelling of the linear guide (4) and the displacement of the lower tool (2) comprise tourque motors.

6. The apparatus according to any of Claims 1 to 5, **characterized in that** a crank gear is provided for the displacement of the lower tool (2).

7. The apparatus according to Claim 1, **characterized in that** a drive for the swivelling of the linear guide (4) and a drive for the displacement of the lower tool (2) respectively comprise a cam disc and a roller associated therewith, the displacements of which, which are brought about by the cam disc, are able to be transferred to roller levers which act on push rods (7, 14), in which one push rod (14) for the swivelling of the linear guide engages eccentrically thereon, whilst the other push rod (7) for the displacement of the lower tool engages on a bent lever arrangement (5, 6), one end of which is arranged on the lower tool (2) and the other end of which is fixedly arranged.

8. The apparatus according to Claim 6, **characterized in that** the two cam discs sit on the same shaft which is drivable by a drive.

9. The apparatus according to Claim 6, **characterized in that** the two cam discs have separate drives which are controllable independently of each other.

## Revendications

1. Dispositif de façonnage, de découpage et d'empilage de pièces embouties en matière thermoplastique, comportant un transport de film intermittent, un chauffage, un outil supérieur stationnaire, un outil inférieur (2) susceptible de monter et de s'abaisser, ainsi que de pivoter, et un dispositif d'empilage, l'outil inférieur (2) étant logé dans un guidage linéaire (4) pivotant, **caractérisé en ce qu'**un point pivotant du guidage linéaire (4) est disposé en son centre et **en ce que** le logement pivotant pour le guidage linéaire (4) est disposé de façon stationnaire.

2. Dispositif selon la revendication 1, **caractérisé en ce que** sur chacun des deux côtés d'une table inférieure (1) portant l'outil inférieur (2), il est prévu un guidage linéaire (4), qui en son centre comporte un tourillon (8) qui est logé dans un palier (9) stationnaire et **en ce qu'**un entraînement pivotant s'engage sur le guidage linéaire.

3. Dispositif selon la revendication 1 ou 2, **caractérisé en ce que** des entraînements pour le pivotement du guidage linéaire (4) et le déplacement de l'outil inférieur (2) comprennent des servomoteurs séparés.

4. Dispositif selon la revendication 3, **caractérisé en ce que**, entre le servomoteur et l'élément de construction devant être respectivement entraîné est disposée une transmission mécanique.

5. Dispositif selon la revendication 1 ou 2, **caractérisé en ce que** les entraînements pour le pivotement du guidage linéaire (4) et pour le déplacement de l'outil inférieur (2) comprennent des moteurs torque.

6. Dispositif selon l'une quelconque des revendications 1 à 5, **caractérisé en ce que** pour le déplacement de l'outil inférieur (2), il est prévu une transmission à bielle.

7. Dispositif selon la revendication 1, **caractérisé en ce qu'**un entraînement pour le pivotement du guidage linéaire (4) et un entraînement pour le déplacement de l'outil inférieur (2) comprennent chacun une came et un galet associé à cette dernière, dont les déplacements provoqués par les cames sont transmissibles sur des leviers à galets, qui agissent sur des bielles (7, 14), pour le déplacement du guidage linéaire, l'une des bielles (14) s'engageant de façon excentrique sur cette dernière, alors que, pour le déplacement de l'outil inférieur, l'autre bielle, (7) s'engage sur un dispositif de genouillère (5, 6) dont l'une des extrémités est disposée sur l'outil inférieur (2) et dont l'autre extrémité est disposée de façon stationnaire.

8. Dispositif selon la revendication 6, **caractérisé en ce que** les deux cames sont placées sur le même arbre, qui est susceptible d'être entraîné par un entraînement.

9. Dispositif selon la revendication 6, **caractérisé en ce que** les deux cames comportent des entraînements séparés qui sont réglables indépendamment l'un de l'autre.
